# EUROPÄISCHE PATENTSCHRIFT

(11) **EP 1 021 453 B1**
(45) Veröffentlichungstag und Bekanntmachung des Hinweises auf die Patenterteilung: **17.07.2002**
(21) Anmeldenummer: 98954291.5
(22) Anmeldetag: 28.09.1998
(51) Int. Cl.: C07F 15/06, C07F 15/02, C07F 19/00, C08G 65/10, B01J 27/26

(54) **MULTIMETALLCYANIDKOMPLEXE ALS KATALYSATOREN**
MULTI-METAL CYANIDE COMPLEXES AS CATALYSTS
COMPLEXES CYANURES A METAUX MULTIPLES S'UTILISANT COMME CATALYSEURS

(30) Priorität: 29.09.1997 DE 19742978
(43) Veröffentlichungstag der Anmeldung: 26.07.2000
(73) Patentinhaber: BASF AKTIENGESELLSCHAFT, 67056 Ludwigshafen (DE)
(72) Erfinder: GROSCH, Georg, Heinrich, D-67098 Bad Dürkheim (DE); LARBIG, Harald, D-67063 Ludwigshafen (DE); LORENZ, Reinhard, D-67117 Limburgerhof (DE); JUNGE, Dieter, D-67227 Frankenthal (DE); GEHRER, Eugen, D-67069 Ludwigshafen (DE); TREULING, Ulrich, D-64625 Bensheim (DE)
(74) Vertreter: Isenbruck, Günter, Dr.
(86) Internationale Anmeldenummer: EP9806154
(87) Internationale Veröffentlichungsnummer: WO9916775

(56) Entgegenhaltungen:
- EP-A- 0 755 716
- EP-A- 0 862 947
- CHEMICAL ABSTRACTS, vol. 71, no. 18, 3. November 1969 Columbus, Ohio, US; abstract no. 85646, TRIBUNESCU, P. ET AL: "Structures of zinc, cadmium, nickel, and manganese hyxacyanocobaltates" XP002092914 & REV. ROUM. CHIM. (1969), 14(4), 463-7 CODEN: RRCHAX,1969,

## Beschreibung

Die Erfindung betrifft kristalline Multimetallcyanidkomplexe, Gemische daraus, Verfahren zu ihrer Herstellung, ihre Verwendung als Katalysator und ein Verfahren zur Herstellung von Polyetherpolyolen unter Verwendung dieses Katalysators.

Für die Herstellung von Polyurethanschäumen mit einer breiten Palette von Eigenschaften sind maßgeschneiderte Polyetherpolyole erforderlich. Beispielsweise werden hochmolekulare Polyole für Weichschäume und kürzerkettige Polyole für Hartschäume verwendet.

Die Herstellung von Polyetherpolyolen erfolgt in der Regel aus Alkylenoxiden in Gegenwart eines Starters unter Einsatz unterschiedlicher Katalysatoren, wie Basen, hydrophobierter Doppelschichthydroxide, saurer oder lewis-saurer Systeme, metallorganischer Verbindungen oder Multimetallcyanidkomplex-Verbindungen.

Von zunehmendem ökonomischen Interesse sind langkettige Polyetherpolyole, die einen niedrigen Gehalt an ungesättigten Bestandteilen aufweisen. Zur Herstellung solcher Polyetherpolyole mit niedrigen Gehalten an ungesättigten Bestandteilen haben sich insbesondere Multimetallcyanidkomplex-Verbindungen als Katalysatoren bewährt.

Multimetallcyanidkomplex-Katalysatoren sind an sich bekannt. Dabei handelt es sich in der Regel um röntgenographisch schlecht charakterisierbare, wenig kristalline und zum Teil auch röntgenamorphe Verbindungen oder um kristalline Doppelmetallcyanide, die eine kubische Struktur besitzen.

In der EP-A-0 654 302 sind verbesserte Doppelmetallcyanidkomplex-Katalysatoren beschrieben. Es werden insbesondere Zinkhexacyanocobaltat-Katalysatoren aufgeführt, die zur Polymerisation von Epoxiden eingesetzt werden.

In der EP-A-0 743 093 sind hochaktive Doppelmetallcyanidkomplex-Katalysatoren beschrieben. Die beschriebenen Katalysatoren sind im wesentlichen amorph und basieren auf Zinkhexacyanocobaltat. Sie werden zur Polymerisation von Epoxiden eingesetzt.

In der EP-A-0 755 716 sind hochaktive Doppelmetallcyanidkomplex-Katalysatoren beschrieben. Sie sind im wesentlichen kristallin und basieren auf Zinkhexacyanocobaltat-Komplexen.

Doppelmetallcyanid-Katalysatoren werden für die Polymerisation von Epoxiden als geeignet betrachtet, wenn sie entweder amorph sind, wobei sie mehr als 0,2 Mol Metallsalz pro Mol Doppelmetallcyanid enthalten, oder kristallin sind, wobei sie weniger als 0,2 Mol Metallsalz pro Mol Doppelmetallcyanid enthalten.

Aufgabe der vorliegenden Erfindung ist die Bereitstellung von Multimetallcyanidkomplexen, die weitgehend oder vollständig kristallin sind und als Katalysatoren eine hohe Aktivität aufweisen.

Die Aufgabe wird erfindungsgemäß gelöst durch Bereitstellung von kristallinen Multimetallcyanidkomplexen der allgemeinen Formel (I)

M¹ ₐ[M²(CN)_{b}L¹ _{c}]_{d}*e(M¹ _{f}X_{g})*hL²'iH₂O (I)

in der
- M¹: mindestens ein Element aus der Gruppe bestehend aus Zn(II), Fe(II), Co(III), Ni(II), Mn(II), Co(II), Sn(II), Pb(II), Fe(III), Mo(IV), Mo(VI), Al(III), V(IV), V(V), Sr(II), W(IV), W(VI), Cu(II), und Cr(III) ist,
- M²: mindestens ein Element aus der Gruppe, bestehend aus Fe(II), Fe(III), Co(III), Cr(III), Mn(II), Mn(III), Ir(III), Rh(III), Ru(II), V(IV), V(V), Co(II) und Cr(II) ist,
- L¹: mindestens ein Ligand aus der Gruppe, bestehend aus Cyanid, Carbonyl, Cyanat, Isocyanat, Nitril, Thiocyanat und Nitrosyl ist,
- X: ein Formiatanion, Acetatanion oder Propionatanion ist,
- L²: mindestens ein mit Wasser mischbarer Ligand aus der Gruppe, bestehend aus Alkoholen, Aldehyden, Ketonen, Ethern, Polyethern, Estern, Harnstoffderivaten, Amiden, Nitrilen und Sulfiden ist,
- a, b, c, d, e, f, g, h, i: ganze Zahlen sind, wobei
- a, b, c und d: so gewählt sind, daß die Elektroneutralitätsbedingung erfüllt ist, und
- f und g: so gewählt sind, daß die Elektroneutralitätsbedingung erfüllt ist,
dessen Röntgendiffraktogramm. Reflexe bei mindestens den d-Werten
6,10 Å ± 0,04 Å
5,17 Å ± 0,04 Å
4,27 Å ± 0,02 Å
3,78 Å ± 0,02 Å
3,56 Å ± 0,02 Å
3,004 Å ± 0,007 Å
2,590 Å ± 0,006 Å
2,354 Å ± 0,004 Å
2,263 Å ± 0,004 Å
aufweist, wenn X ein Formiatanion ist,
dessen Röntgendiffraktogramm Reflexe bei mindestens den d-Werten
5,20 Å ± 0,02 Å
4,80 Å ± 0,02 Å
3,75 Å ± 0,02 Å
3,60 Å ± 0,02 Å
3,46 Å ± 0,01 Å
2,824 Å ± 0,008 Å
2,769 Å ± 0,008 Å
2,608 Å ± 0,007 Å
2,398 Å ± 0,006 Å
aufweist, wenn X ein Acetatanion ist,
und dessen Röntgendiffraktogramm Reflexe bei mindestens den d-Werten
5,59 Å ± 0,05 Å
5,40 Å ± 0,04 Å
4,08 Å ± 0,02 Å
3,94 Å ± 0,02 Å
3,76 Å ± 0,02 Å
3,355 Å ± 0,008 Å
3,009 Å ± 0,007 Å
2,704 Å ± 0,006 Å
2,381 Å ± 0,004 Å
aufweist, wenn X ein Propionatanion ist.,
die wie nachstehend beschrieben herstellbar sind.

Dabei weisen die Multimetallcyanidkomplexe vorzugsweise die vorstehenden d-Werte als hauptsächlich auftretende Werte auf.

Vorzugsweise treten mindestens die nachstehenden d-Werte auf. Insbesondere besitzen die d-Werte die nachstehenden relativen Intensitäten Iᵣₑₗ, die auf den jeweils stärksten Reflex im Spektrum (= 100%) bezogen sind
wenn X ein Formiatanion ist:
8,42 Å ± 0,04 Å (Iᵣₑₗ = 7)
6,10 Å ± 0,04 Å (Iᵣₑₗ = 40)
5,16 Å ± 0,04 Å (Iᵣₑₗ = 100)
4,26 Å ± 0,02 Å (Iᵣₑₗ = 80)
3,78 Å ± 0,02 Å (Iᵣₑₗ = 50)
3,55 Å ± 0,02 Å (Iᵣₑₗ = 60)
3,27 Å ± 0,01 Å (Iᵣₑₗ = 15)
3,213 Å ± 0,008 Å (Iᵣₑₗ = 5)
3,053 Å ± 0,008 Å (Iᵣₑₗ = 15)
3,004 Å ± 0,007 Å (Iᵣₑₗ = 50)
2,828 Å ± 0,006 Å (Iᵣₑₗ = 17)
2,590 Å ± 0,006 Å (Iᵣₑₗ = 30)
2,449 Å ± 0,004 Å (Iᵣₑₗ = 23)
2,375 Å ± 0,004 Å (Iᵣₑₗ = 10)
2,354 Å ± 0,004 Å (Iᵣₑₗ = 25)
2,263 Å ± 0,004 Å (Iᵣₑₗ = 34)
2,184 Å ± 0,004 Å (Iᵣₑₗ = 10)
2,137 Å ± 0,004 Å (Iᵣₑₗ = 22)
2,115 Å ± 0,004 Å (Iᵣₑₗ = 17)
1,891 Å ± 0,004 Å (Iᵣₑₗ = 20)
1,846 Å ± 0,004 Å (Iᵣₑₗ = 26)
1,807 Å ± 0,004 Å (Iᵣₑₗ = 22)
1,727 Å ± 0,004 Å (Iᵣₑₗ = 22)
wenn X ein Acetatanion ist:
8,45 Å ± 0,04 Å (Iᵣₑₗ = 4)
6,40 Å ± 0,04 Å (Iᵣₑₗ = 2)
6,16 Å ± 0,04 Å (Iᵣₑₗ = 7)
5,60 Å ± 0,04 Å (Iᵣₑₗ = 5)
5,20 Å ± 0,02 Å (Iᵣₑₗ = 100)
5,01 Å ± 0,02 Å (Iᵣₑₗ = 3)
4,80 Å ± 0,02 Å (Iᵣₑₗ = 45)
4,72 Å ± 0,02 Å (Iᵣₑₗ = 7)
4,23 Å ± 0,02 Å (Iᵣₑₗ = 7)
4,11 Å ± 0,02 Å (Iᵣₑₗ = 5)
4,05 Å ± 0,02 Å (Iᵣₑₗ = 4)
3,91 Å ± 0,02 Å (Iᵣₑₗ = 9)
3,75 Å ± 0,02 Å (Iᵣₑₗ = 25)
3,60 Å ± 0,02 Å (Iᵣₑₗ = 44)
3,46 Å ± 0,01 Å (Iᵣₑₗ = 42)
3,34 Å ± 0,01 Å (Iᵣₑₗ = 5)
3,24 Å ± 0,01 Å (Iᵣₑₗ = 6)
3,09 Å ± 0,01 Å (Iᵣₑₗ = 5)
2,824 Å ± 0,008 Å (Iᵣₑₗ = 13)
2,769 Å ± 0,008 Å (Iᵣₑₗ = 15)
2,703 Å ± 0,008 Å (Iᵣₑₗ = 5)
2,608 Å ± 0,007 Å (Iᵣₑₗ = 40)
2,398 Å ± 0,006 Å (Iᵣₑₗ = 16)
2,254 Å ± 0,006 Å (Iᵣₑₗ = 16)
2,037 Å ± 0,006 Å (Iᵣₑₗ = 14)
1,876 Å ± 0,004 Å (Iᵣₑₗ = 13)
und wenn X ein Propionatanion ist:
10,10 Å ± 0,1 Å (Iᵣₑₗ = 12)
5,59 Å ± 0,05 Å (Iᵣₑₗ = 45)
5,40 Å ± 0,04 Å (Iᵣₑₗ = 100)
5,03 Å ± 0,04 Å (Iᵣₑₗ = 4)
4,71 Å ± 0,02 Å (Iᵣₑₗ = 5)
4,08 Å ± 0,02 Å (Iᵣₑₗ = 22)
4,03 Å ± 0,02 Å (Iᵣₑₗ = 5)
3,94 Å ± 0,02 Å (Iᵣₑₗ = 30)
3,76 Å ± 0,02 Å (Iᵣₑₗ = 32)
3,355 Å ± 0,008 Å (Iᵣₑₗ = 15)
3,260 Å ± 0,008 Å (Iᵣₑₗ = 7)
3,009 Å ± 0,007 Å (Iᵣₑₗ = 17)
2,930 Å ± 0,008 Å (Iᵣₑₗ = 7)
2,804 Å ± 0,006 Å (Iᵣₑₗ = 8)
2,704 Å ± 0,006 Å (Iᵣₑₗ = 24)
2,515 Å ± 0,004 Å (Iᵣₑₗ = 5)
2,38 Å ± 0,004 Å (Iᵣₑₗ = 21)
2,311 Å ± 0,004 Å (Iᵣₑₗ = 18)

Die Bestimmung der Röntgendiffraktogramme erfolgte dabei bei einer Wellenlänge von 1,5406 Å bei Raumtemperatur. Entsprechende Röntgendiffraktogramme sind in den beigefügten Zeichnungen in Figur 1 für X = Formiat in den Figuren 2 bis 4 für X = Acetat und in Figur 5 für X = Propionat dargestellt. Sie sind in den Beispielen näher erläutert.

Die Erfindung betrifft ebenso kristalline Multimetallcyanidkomplexe der allgemeinen Formel (I) mit den vorstehend angegebenen Bedeutungen der Komponenten, und die wie nachstehend beschrieben herstellbar sind, wobei X ein Acetatanion ist, deren Röntgendiffraktogramme Reflexe zeigen, die einer monoklinen Elementarzelle mit den Gitterparametern:
a = 12,38 Å ± 0,05 Å,
b = 7,50 Å ± 0,05 Å, c = 8,49 Å ± 0,05 Å, α = 90°, β = 94,5° ± 0,5°, γ = 90° entsprechen. Vorzugsweise zeigen sie dabei die vorstehend aufgeführten Reflexe mit den angegebenen relativen Intensitäten Iᵣₑₗ.

Die erfindungsgemäßen Multimetallcyanidkomplexe können in teilweise, überwiegend oder vollständig kristalliner Form erhalten werden. Die Erfindung betrifft auch ein Gemisch aus Multimetallcyanidkomplexen der allgemeinen Formel (I) mit den vorstehend angegebenen Bedeutungen für M¹, M², L¹, X, L², a, b, c, d, e, f, g, h, i, wobei mindestens 20 Gew.-% des Gemisches aus den vorstehend beschriebenen kristallinen Komplexen bestehen. Besonders bevorzugt bestehen mindestens 50 Gew.-%, insbesondere mindestens 90 Gew.-%, speziell mindestens 95 Gew.-% des Gemisches aus den vorstehend aufgeführten kristallinen Komplexen. Vorzugsweise liegt dabei nur jeweils ein Rest im Gemisch vor, das heißt X ist ein Formiat-, Acetat- oder Propionatanion.

Unter den kristallinen Multimetallcyanidkomplexen der allgemeinen Formel (I) sind solche bevorzugt, die folgende Merkmale aufweisen:
M¹ und M² können gleich oder voneinander verschieden sein. Es kann sich jeweils um Gemische von Elementen oder vorzugsweise um ein Element handeln:
   - M¹: ist ein Element aus der Gruppe, bestehend aus Zn(II), Fe(II), Ni(II), Mn(II) oder Co(II), besonders bevorzugt Zn(II).
   - M²: ist mindestens ein Element aus der Gruppe, bestehend aus Co(III), Fe(III), Mn(III), Rh(III), Ir(III), Co(II), Fe(II), besonders bevorzugt sind Co(III), Fe(III), Rh(III), Ir(III), Mn(III),
   - L¹: ist mindestens ein Ligand aus der Gruppe, bestehend aus Cyanid, Nitrosyl, Carbonyl, Cyanat, besonders bevorzugt Cyanid, Nitrosyl,
   - L²: ist mindestens ein mit Wasser mischbarer Ligand aus der Gruppe, bestehend aus Alkoholen, Ketonen, Ethern, Polyethern und Estern sowie Mischungen davon, bevorzugt Alkoholen, Ethern, Polyethern und Mischungen davon.

Bevorzugte Werte für b und c sind b = 6, c = 0.

Besonders bevorzugt weisen die Komplexe eines oder mehrere, insbesondere alle der nachstehenden Merkmale auf:
- M¹ = Zn (II)
- M² = Co (III), Fe(III)
- L¹ = CN
- L² = tert.-Butanol
- h oder i können gleich null sein.

Die erfindungsgemäßen Multimetallcyanidkomplexe oder Gemische sind herstellbar durch Umsetzung von Cyanometallat-Wasserstoffsäuren mindestens eines Elements M² aus der Gruppe, bestehend aus
Fe(II), Fe(III), Co(III), Cr(III), Mn(II), Mn(III), Ir(III), Rh(III), Ru(II), V(IV), V(V), Co(II) und Cr(II),
mit Formiaten, Acetaten oder Propionaten mindestens eines Elements M¹ aus der Gruppe, bestehend aus
Zn(II), Fe(II), Co(III), Ni(II), Mn(II), Co(II), Sn(II), Pb(II), Fe(III), Mo(IV), Mo(VI), Al(III), V(IV), V(V), Sr(II), W(IV), W(VI), Cu(II), und Cr(III)
in Gegenwart mindestens eines mit Wasser mischbaren Liganden L² aus der Gruppe, bestehend aus Alkoholen, Aldehyden, Ketonen, Ethern, Polyethern, Estern, Harnstoffderivaten, Amiden, Nitrilen und Sulfiden.

Es wurde erfindungsgemäß gefunden, daß die kristallinen und hochaktiven Doppelmetallcyanidkomplexe durch Umsetzung von Cyanometallatwasserstoffsäuren mit Metallcarboxylaten in Gegenwart eines mit Wasser mischbaren organischen und Heteroatome enthaltenden Liganden herstellbar sind.

Dabei wird beispielsweise H₃[Co(CN)₆]'nH₂O als Cyanometallat-Wasserstoffsäure eingesetzt. Die Metallformiate, Metallacetate oder Metallpropionate, vorzugsweise Zinkformiat, Zinkacetat oder Zinkpropionat können auch aus anderen Metallsalzen erhalten werden.

Cyanometallat-Wasserstoffsäuren sind Verbindungen, die in wäßriger Lösung sehr gut handhabbar sind. Zur Herstellung von Cyanometallat-Wasserstoffsäuren sind mehrere Verfahren bekannt. Beispielsweise können sie ausgehend vom Alkalicyanometallat über das Silbercyanometallat hergestellt werden, vergleiche W. Klemm et al., Z. Anorg. Allg. Chem. 308, 179 (1961). Ferner können Alkalioder Erdalkalicyanometallate mit Hilfe eines sauren Ionentauschers in die Cyanometallat-Wasserstoffsäure umgewandelt werden, siehe F. Hein, H. Lilie, Z. Anorg. Allg. Chem. 270, 45 (1952), A. Ludi et al., Helv. Chim. Acta 50, 2035 (1967). Weitere Synthesemöglichkeiten sind in G. Brauer (Herausgeber) "Handbuch der präparativen anorganischen Chemie", Ferdinand Enke Verlag, Stuttgart, 1981 aufgeführt. Bevorzugt ist die Umsetzung von Alkali- oder Erdalkalicyanometallaten an sauren Ionentauschern. Bei der Verwendung eines sauren Ionentauschers erhält man wäßrige Cyanometallat-Wasserstoffsäurelösungen, die sofort weiterverarbeitet oder auch gelagert werden können. Bei längerer Lagerungszeit sollten dabei die Cyanometallat-Wasserstoffsäurelösungen in lichtundurchlässigen Behältnissen aufbewahrt werden. Bei direkter Weiterverarbeitung der frisch hergestellten Cyanometallat-Wasserstoffsäurelösungen kann dies vernachlässigt werden.

Bei der Herstellung der erfindungsgemäßen Komplexe sollte der Anteil der Cyanometallat-Wasserstoffsäure in der Lösung, bezogen auf die Gesamtmenge an Cyanometallat-Komplexen, mindestens 50 Gew.-%, vorzugsweise mindestens 80 Gew.-%, besonders bevorzugt mindestens 90 Gew.-% betragen.

Der Anteil an Alkalicyanometallat sollte also unter 50 Gew.-%, vorzugsweise unter 20 Gew.-%, besonders bevorzugt unter 10 Gew.-% liegen.

Vorzugsweise wird das Formiat, Acetat oder Propionat mindestens eines Elements M¹ im Überschuß gegenüber der Cyanometallat-Wasserstoffsäure eingesetzt. Bevorzugt sind molare Verhältnisse des Metallions zur Cyanometallat-Komponente von 1,1 bis 7,0, besonders bevorzugt von 1,2 bis 5,0, insbesondere von 1,3 bis 3,0. Dabei kann die Cyanometallat-Wasserstoffsäurelösung zur Metallsalzlösung gegeben werden. Vorzugsweise wird jedoch die Metallsalzlösung zur Cyanometallat-Wasserstoffsäurelösung gegeben.

Nach der Vereinigung der Metallsalzlösung mit der Cyanometallat-Wasserstoffsäurelösung wird zur entstehenden Suspension eine mit Wasser mischbare organische Komponente gegeben, die Heteroatome enthält (Ligand L²).

Der Ligand L² wird vorzugsweise nach Vereinigung der Metallsalzlösung mit der Cyanometallat-Wasserstoffsäurelösung zur entstehenden Suspension gegeben, er kann jedoch auch in eine oder beide der Eduktlösungen gegeben werden. In diesem Fall wird er vorzugsweise der Cyanometallat-Wasserstoffsäurelösung zugesetzt.

Die mit dem Liganden L² behandelten Multimetallcyanidkomplexe werden nach der Synthese entweder abfiltriert oder abzentrifugiert, vorzugsweise filtriert. Die so erhaltenen Festkörper werden unter milden Bedingungen getrocknet, wobei vorzugsweise unter schwach vermindertem Druck gearbeitet wird.

Die so erhaltenen Doppelmetallcyanidkomplexe sind in der Regel gut kristallin. Sie fallen in der Regel als mehrphasige, kristalline Pulver an. Es ist dabei möglich, die vorstehend aufgeführten kristallinen Multimetallcyanidkomplexe im wesentlichen rein oder vollständig rein darzustellen. Dabei ergeben sich im Röntgendiffraktogramm unter anderem die vorstehend aufgeführten Reflexe. Die Abweichungen der d-Werte sind durch die Art und Menge des jeweils verwendeten Liganden L² bedingt. Dies hat auch einen Einfluß auf die relativen Intensitäten der Reflexe.

In den Multimetallcyanidkomplexen beträgt der Anteil der vorstehend beschriebenen kristallinen (Aktiv)phase vorzugsweise mindestens 20%, besonders bevorzugt mindestens 50%, insbesondere mindestens 90%, speziell mindestens 95%, bezogen auf das Gesamtgewicht der Multimetalcyanidkomplexe. Als weitere Phasen können weitere kristalline oder amorphe doppelmetallcyanidhaltige Phasen vorliegen. Bevorzugt enthalten die Komplexe jedoch keine weiteren Phasen.

Die Komplexe oder Gemische können als Katalysatoren oder zur Herstellung von gegebenenfalls geträgerten Katalysatoren verwendet werden.

Der Katalysator umfaßt dabei die vorstehenden Komplexe, gegebenenfalls auf einem Träger. Diese Katalysatoren können insbesondere zur Alkoxylierung von Verbindungen, die aktive Wasserstoffatome aufweisen, mit Alkylenoxiden eingesetzt werden. Als Alkylenoxide kommen dabei vorzugsweise Ethylenoxid, Propylenoxid und/oder Butylenoxid in Betracht. Aktive Wasserstoffatome liegen beispielsweise in Hydroxylgruppen oder primären und sekundären Aminogruppen vor.

Vorzugsweise werden die Katalysatoren in einem Verfahren zur Herstellung von Polyetherpolyolen durch Umsetzung von Diolen oder Polyolen mit Ethylenoxid, Propylenoxid, Butylenoxid oder Gemischen davon eingesetzt. Aufgrund ihrer hohen Aktivität kann die Menge an Multimetallcyanidkomplexen gering gehalten werden. Vorzugsweise beträgt der Anteil, bezogen auf die Masse an zu erzeugendem Produkt, weniger als 0,5 Gew.-%. Besonders bevorzugt sind Anteile von weniger als 500 ppm, insbesondere weniger als 250 ppm.

Die Diole oder Polyole können dabei bereits Alkylenoxidgruppen enthalten. Beispielsweise kann als Diol ein Oligopropylenglykol eingesetzt werden, das durch eine alkalisch katalysierte Umsetzung von Dipropylenglykol mit Propylenoxid erhalten wird.

Die Erfindung wird nachstehend anhand von Beispielen näher erläutert.

### Beispiele

### Herstellung der Multimetallcyanidkomplexe

### Beispiel 1a

400 ml stark saurer Ionenaustauscher (K2431 von Bayer) werden zweimal mit 180 g HCl (37% HCl-Gehalt) regeneriert und danach mit Wasser solange gewaschen, bis der Ablauf neutral ist. Danach gibt man eine Lösung von 46,6 g K₃[Co(CN)₆] in 130 ml Wasser auf die Austauschersäule. Die Säule wird danach solange eluiert, bis der Ablauf wieder neutral ist. Das Co:K-Verhältnis im gewonnenen Eluat war größer 10:1. Die Menge an gewonnenem Eluat betrug 647 g.

### Beispiel 1b (Acetat)

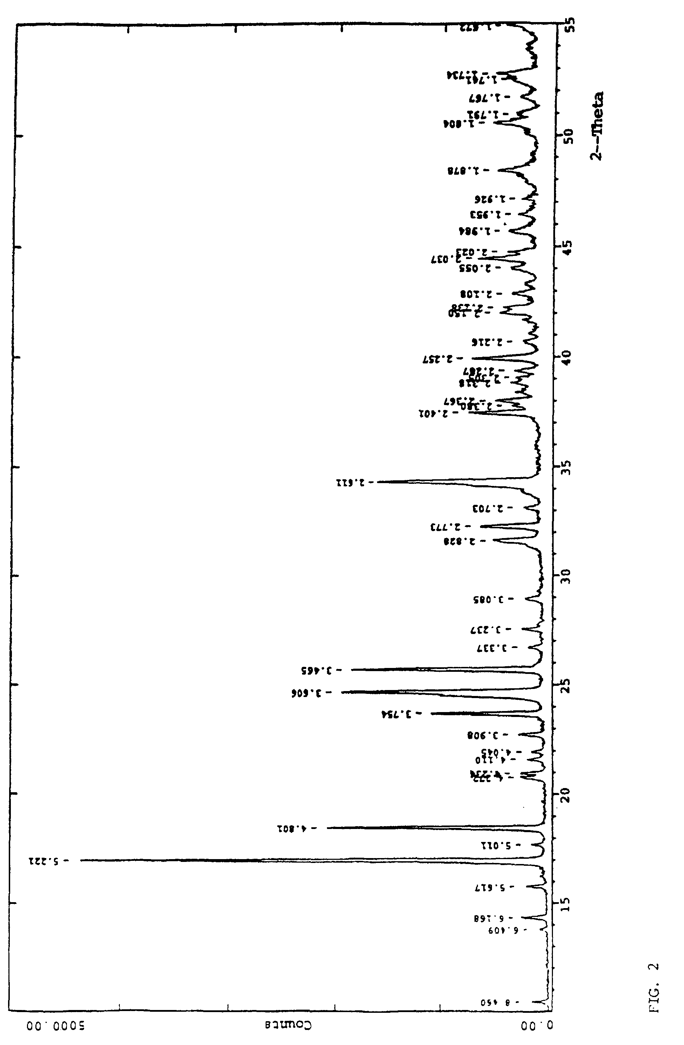

323 g Eluat aus Beispiel 1a werden auf 40°C temperiert, und unter Rühren wird eine Lösung von 20,0 g Zn(II)-Acetat-Dihydrat in 70 g Wasser dazugegeben. Danach werden 69,1 g tert.-Butanol unter Rühren zugegeben, und die Suspension wird bei 40°C weitere 30 min gerührt. Danach wird der Feststoff abgesaugt und auf dem Filter mit 100 ml tert.-Butanol gewaschen. Der so behandelte Festkörper wird bei Raumtemperatur getrocknet. Von dem getrockneten Feststoff wurde ein Röntgendiffraktogramm aufgenommen (siehe Figur 2). Das Diffraktogramm zeigt die reine Aktivphase.

### Beispiel 2a

400 ml stark saurer Ionenaustauscher (K2431 von Bayer) werden zweimal mit 180 g HCl (37% HCl-Gehalt regeneriert und danach mit Wasser solange gewaschen, bis der Ablauf neutral ist. Danach gibt man eine Lösung von 40,4 g K₃[Co(CN)₆] in 130 ml Wasser auf die Austauschersäule. Die Säule wird danach solange eluiert, bis der Ablauf wieder neutral ist. Das Co:K-Verhältnis im gewonnenen Eluat war größer 10:1. Die Menge an gewonnenem Eluat betrug 630 g.

### Beispiel 2b (Acetat)

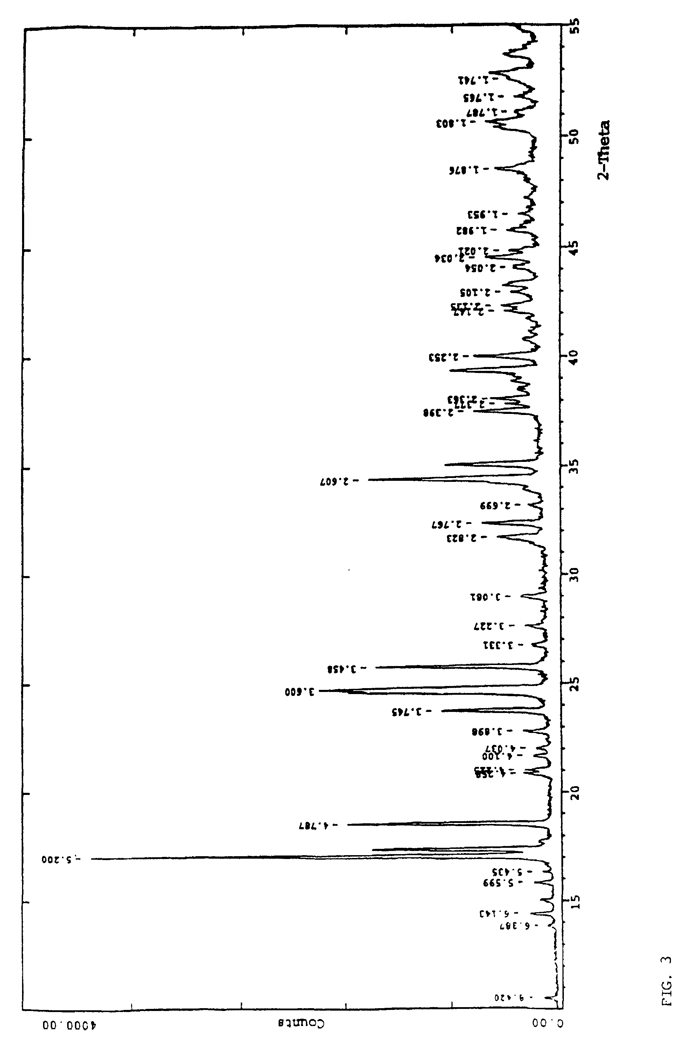

315 g Eluat aus Beispiel 2a werden auf 40°C temperiert, und unter Rühren wird eine Lösung von 20,0 g Zn(II)-Acetat-Dihydrat in 70 g Wasser dazugegeben. Danach werden 69,1 g tert.-Butanol unter Rühren zugegeben, und die Suspension wird bei 40°C weitere 30 min gerührt. Danach wird der Feststoff abgesaugt und auf dem Filter mit 100 ml tert.-Butanol gewaschen. Der so behandelte Festkörper wird bei Raumtemperatur getrocknet. Von dem getrockneten Feststoff wurde ein Röntgendiffraktogramm aufgenommen (siehe Figur 3, C bedeutet Counts). Das Diffraktogramm zeigt neben der Aktivphase noch Anteile einer kubischen Minoritätsphase.

### Beispiel 3 (Acetat)

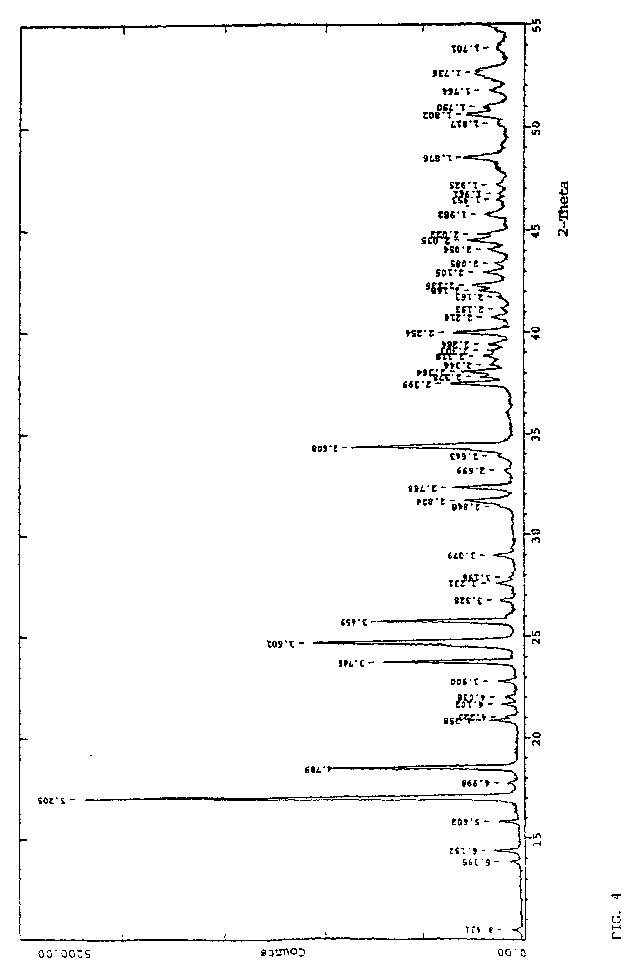

200 ml stark saurer Ionentauscher (K2431 von Bayer) werden zweimal mit 90 g HCl (37% HCl-Gehalt) regeneriert und danach mit Wasser solange gewaschen, bis der Ablauf neutral ist. Danach gibt man eine Lösung von 16,8 g K₃[Co(CN)₆] in 50 ml Wasser auf die Austauschersäule. Die Säule wird danach solange eluiert, bis der Ablauf wieder neutral ist. Das Co:K-Verhältnis im gewonnenen Eluat war größer 10:1. Die 342 g Eluat werden auf 40°C temperiert, mit 34 g tert.-Butanol versetzt und anschließend unter Rühren mit einer Lösung von 20,0 g Zn(II)-Acetat-Dihydrat in 70 ml Wasser versetzt. Die Suspension wird bei 40°C weitere 10 min gerührt und dann werden 35,1 g tert.-Butanol zugegeben und die Suspension bei 40°C weitere 30 min gerührt. Danach wird der Feststoff abgesaugt und auf dem Filter mit 300 ml tert.-Butanol gewaschen. Der so behandelte Festkörper wird bei Raumtemperatur getrocknet. Von dem getrockneten Feststoff wurde ein Röntgendiffraktogramm aufgenommen (siehe Figur 4). Das Diffraktogramm zeigt neben der Aktivphase keine weiteren Minoritätsphasen.

### Beispiel 4a

400 ml stark saurer Ionenaustauscher (K2431 von Bayer) werden zweimal mit 180 g HCl (37% HCl-Gehalt) regeneriert und danach mit Wasser solange gewaschen, bis der Ablauf neutral ist. Danach gibt man eine Lösung von 30 g K₃[Co(CN)₆] in 130 ml Wasser auf die Austauschersäule. Die Säule wird danach solange eluiert, bis der Ablauf wieder neutral ist. Das Co:K-Verhältnis im gewonnenen Eluat war größer 10:1. Die Menge an gewonnenem Eluat betrug 625 g.

### Beispiel 4b (Formiat)

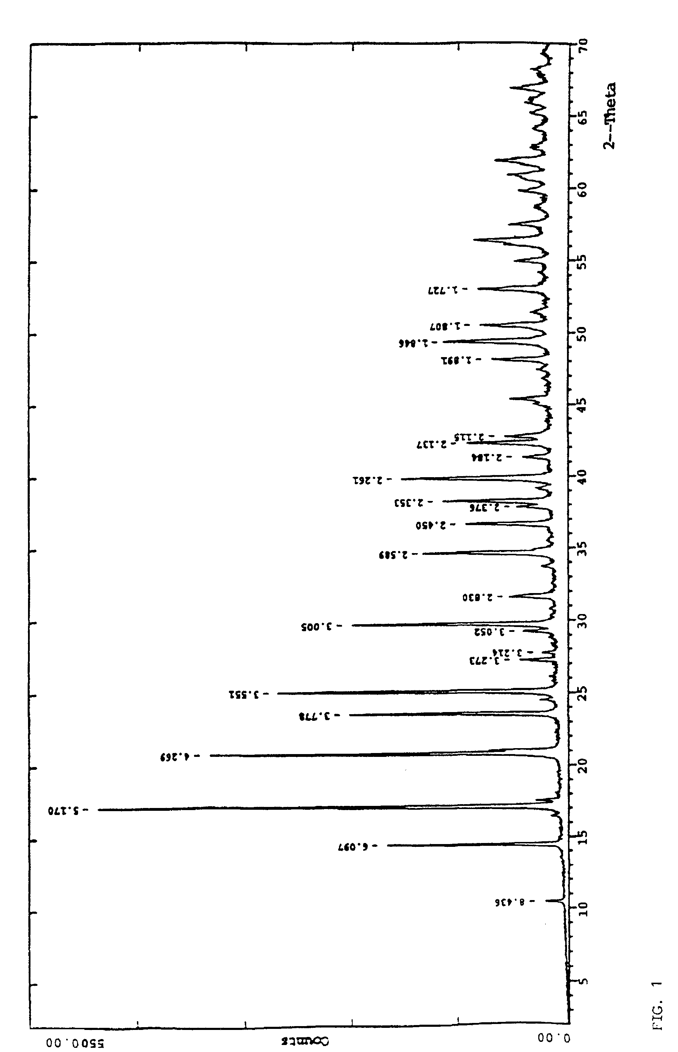

20,4 g basischen Zinkcarbonats (ZnCO₃'2Zn(OH)₂'xH₂O) (F.W. = 324,15 g/mol, Aldrich) gibt man mit 470 g Wasser und 14,5 g Ameisensäure zusammen in ein Becherglas und rührt, bis sich das basische Zinkcarbonat vollständig aufgelöst hat und die CO₂-Entwicklung abgeklungen ist. Die so erzeugte Zinkformiatlösung wird auf 60°C temperiert und mit 208 g Eluat aus Beispiel 4a unter Rühren versetzt. Danach werden 69,1 g tert.-Butanol unter Rühren zugegeben, und die Suspension wird bei 60°C weitere 30 min gerührt. Danach wird der Feststoff abgesaugt und auf dem Filter mit 100 ml tert.-Butanol gewaschen. Der so behandelte Festkörper wird bei Raumtemperatur getrocknet. Von dem getrockneten Feststoff wurde ein Röntgendiffraktogramm aufgenommen (siehe Figur 1). Das Diffraktogramm zeigt die erzeugten Aktivphasen.

### Beispiel 5a

400 ml stark saurer Ionenaustauscher (K2431 von Bayer) werden zweimal mit 180 g HCl (37% HCI-Gehalt) regeneriert und danach mit Wasser solange gewaschen, bis der Ablauf neutral ist. Danach gibt man eine Lösung von 30 g K₃[Co(CN)₆] in 130 ml Wasser auf die Austauschersäule. Die Säule wird danach solange eluiert, bis der Ablauf wieder neutral ist. Das Co:K-Verhältnis im gewonnenen Eluat war größer 10:1. Die Menge an gewonnenem Eluat betrug 576 g.

### Beispiel 5b (Propionat)

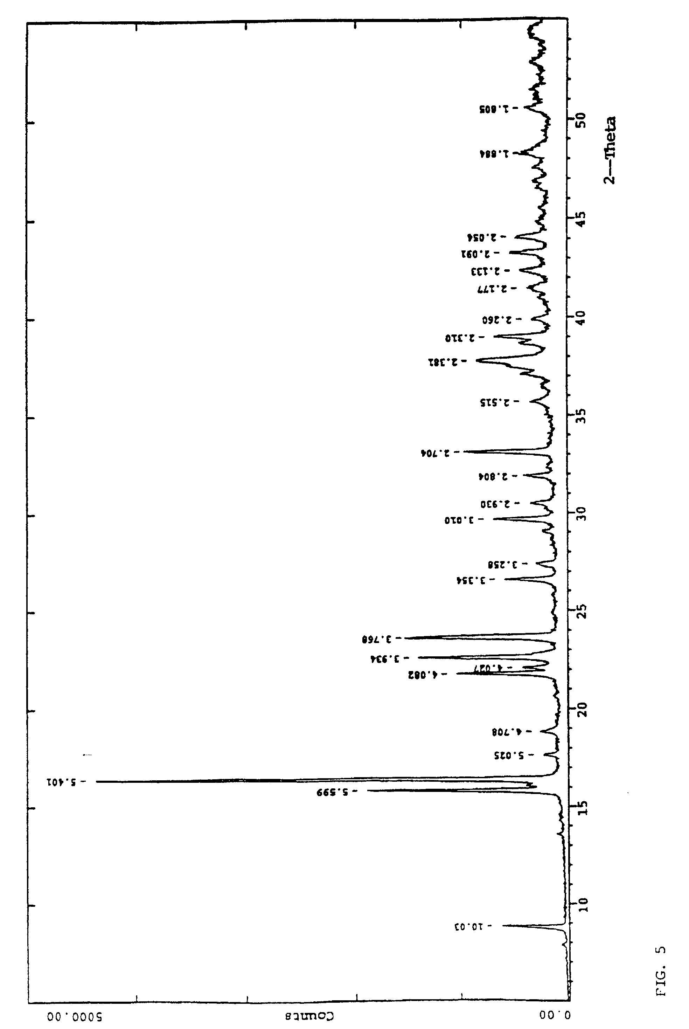

20,4 g basischen Zinkcarbonats (ZnCO₃'2Zn(OH)₂'xH₂O) (F.W. = 324,15 g/mol, Aldrich) gibt man mit 900 g Wasser und 25 g Propionsäure zusammen in ein Becherglas und rührt, bis sich das basische Zinkcarbonat vollständig aufgelöst hat und die CO₂-Entwicklung abgeklungen ist. Die so erzeugte Zinkpropionatlösung wird auf 40°C temperiert und mit 192 g Eluat aus Beispiel 5a unter Rühren versetzt. Danach werden 69,1 g tert.-Butanol unter Rühren zugegeben, und die Suspension wird bei 40°C weitere 30 min gerührt. Danach wird der Feststoff abgesaugt und auf dem Filter mit 100 ml tert.-Butanol gewaschen. Der so behandelte Festkörper wird bei Raumtemperatur getrocknet. Von dem getrockneten Feststoff wurde ein Röntgendiffraktogramm aufgenommen (siehe Figur 5). Das Diffraktogramm zeigt die erzeugten Aktivphasen.

### Synthese von Polyetherpolyolen

In den nachstehenden Beispielen 6 bis 10 wird als Starter ein Oligopropylenglykol benutzt, das durch eine alkalisch katalysierte Umsetzung von Dipropylenglykol mit Propylenoxid bei 105°C erhalten wurde. Dieses Oligopropylenglykol wurde mittels eines Magnesiumsilikates vom Katalysator befreit (OH-Zahl: 280 mg KOH/g; ungesättigte Bestandteile: 0,003 meq/g, Na, K: kleiner 1 ppm).

### Beispiel 6 - Synthese von Polyetherpolyol mit dem Katalysator aus Beispiel 1

514 g eines Oligopropylenglykols werden mit 0,06 g des Katalysators aus Beispiel 1 (entsprechend 24 ppm bezogen auf das Fertigprodukt) in einem Rührautoklaven unter Stickstoffatmosphäre vermischt. Nach dem Evakuieren des Kessels werden bei 105°C 150 g Propylenoxid zudosiert. Das Anspringen der Reaktion wird an dem nach 22 min. einsetzenden Abfall des Druckes erkannt, der nach der Alkylenoxiddosierung zunächst 2,8 bar abs. beträgt. Nach dem vollständigem Abreagieren des Propylenoxides werden weitere 1.814 g Propylenoxid bei derselben Temperatur so zugefahren, daß ein Druck von 1,8 bar nicht überschritten wird. Nach 54 min. ist die Dosierphase beendet. 20 min. nach Abschluß der Dosierphase ist die Abreaktion beendet, wie am Drucksignal zu erkennen ist.

Das erhaltene Polyetherol wird nicht filtriert. Es hat eine Hydroxylzahl von 56,3 mg KOH/g, einen Gehalt an ungesättigten Bestandteilen von 0,0118 meq/g, einen Zinkgehalt von 8 ppm und einen Cobaltgehalt von 3 ppm.

### Beispiel 7 - Synthese von Polyetherpolyol mit dem Katalysator aus Beispiel 2

519,5 eines Oligopropylenglykols werden mit 0,05 g des Katalysators aus Beispiel 2 (entsprechend 20 ppm bezogen auf das Fertigprodukt) in einem Rührautoklaven unter Stickstoffatmosphäre vermischt. Nach dem Evakuieren des Kessels werden bei 105°C 150 g Propylenoxid zudosiert. Das Anspringen der Reaktion wird an dem nach 30 min. einsetzenden Abfall des Druckes erkannt, der nach der Alkylenoxiddosierung zunächst 3,0 bar abs. beträgt. Nach dem vollständigen Abreagieren des Propylenoxides werden weitere 1.831,5 g Propylenoxid bei derselben Temperatur so zugefahren, daß ein Druck von 4,4 bar nicht überschritten wird. Nach 48 min. ist die Dosierphase beendet. 24 min, nach Abschluß der Dosierphase ist die Abreaktion beendet, wie am Drucksignal zu erkennen ist.

Das erhaltene Polyetherol wird nicht filtriert. Es hat eine Hydroxylzahl von 56,0 mg KOH/g, einen Gehalt an ungesättigten Bestandteilen von 0,0125 meq/g, einen Zinkgehalt von 5 ppm und einen Cobaltgehalt von 3 ppm

### Beispiel 8 - Synthese von Polyetherpolyol mit dem Katalysator aus Beispiel 3

516 g eines Oligopropylenglykols werden mit 0,25 g des Katalysators aus Beispiel 3 (entsprechend 100 ppm bezogen auf das Fertigprodukt) in einem Rührautoklaven unter Stickstoffatmosphäre vermischt. Nach dem Evakuieren des Kessels werden bei 105°C 150 g Propylenoxid zudosiert. Das Anspringen der Reaktion wird an dem nach 26 min. einsetzenden Abfall des Druckes erkannt, der nach der Alkylenoxiddosierung zunächst 2,8 bar abs. beträgt. Nach dem vollständigen Abreagieren des Propylenoxides werden weitere 1.822 g Propylenoxid bei derselben Temperatur so zugefahren, daß ein Druck von 2,8 bar nicht überschritten wird. Nach 52 min. ist die Dosierphase beendet. 14 min. nach Abschluß der Dosierphase ist die Abreaktion beendet, wie am Drucksignal zu erkennen ist.

Das erhaltene Polyetherol wird zweimal filtriert. Es hat eine Hydroxylzahl von 56,8 mg KOH/g, einen Gehalt an ungesättigten Bestandteilen von 0,0121 meq/g, einen Zinkgehalt von 8 ppm und einen Cobaltgehalt von 4 ppm.

### Beispiel 9 - Synthese von Oligopropylenglykol mit dem Katalysator aus Beispiel 4

128 g eines Oligopropylenglykols werden mit 0,05 g des Katalysators aus Beispiel 4 (entsprechend 250 ppm bezogen auf das Fertigprodukt) in einem Autoklaven unter Stickstoffatmosphäre vermischt. Nach dem Evakuieren des Autoklaven werden bei 130°C 72 g Propylenoxid zudosiert. Das Anspringen der Reaktion wird an dem nach 65 min. einsetzenden Abfall des Druckes erkannt, der nach der Alkylenoxiddosierung zunächst 8 bar abs. beträgt. Nach 30 min. zeigte konstanter Druckverlauf das vollständige Abreagieren des Propylenoxides an.

### Beispiel 10 - Synthese von Polyetherpolyol mit dem Katalysator aus Beispiel 5

513 g des Oligopropylenglykols werden mit 0,25 g des Katalysators aus Beispiel 5 (entsprechend 100 ppm bezogen auf das Fertigprodukt) in einem Rührautoklaven unter Stickstoffatmosphäre vermischt. Nach dem Evakuieren des Kessels werden bei 105°C 150 g Propylenoxid zudosiert. Das Anspringen der Reaktion wird an dem nach 40 min. einsetzenden Abfall des Druckes erkannt, der nach der Alkylenoxiddosierung zunächst 3,0 bar abs. beträgt. Nach dem vollständigen Abreagieren des Propylenoxides werden weitere 1847 g Propylenoxid bei derselben Temperatur so zugefahren, daß ein Druck von 4,0 bar nicht überschritten wird. Nach 43 min. ist die Dosierphase beendet, 14 min. nach Abschluß der Dosierphase ist die Abreaktion beendet, wie am Drucksignal zu erkennen ist.

Das erhaltene Polyetherol wird zweimal filtriert. Es hat eine Hydroxylzahl von 55,9 mg KOH/g, einen Gehalt an ungesättigten Bestandteilen von 0,0432 meq/g, einen Zinkgehalt von 6 ppm und einen Cobaltgehalt von 3 ppm.

## Patentansprüche

1. Kristalliner Multimetallcyanidkomplex der allgemeinen Formel (I)
M¹ ₐ[M²(CN)_{b}L¹ _{c}]_{d}*e(M¹ _{f}X_{g})*hL²'iH₂O (I)
in der
M¹ mindestens ein Element aus der Gruppe, bestehend aus Zn(II), Fe(II), Co(III), Ni(II), Mn(II), Co(II), Sn(II), Pb(II), Fe(III), Mo(IV), Mo(VI), Al(III), V(IV), V(V), Sr(II), W(IV), W(VI), Cu(II) und Cr(III), ist,
M² mindestens ein Element aus der Gruppe, bestehend aus Fe(II), Fe(III), Co(III), Cr(III), Mn(II), Mn(III), Ir(III), Rh(III), Ru(II), V(IV), V(V), Co(II) und Cr(II), ist,
L¹ mindestens ein Ligand aus der Gruppe, bestehend aus Cyanid, Carbonyl, Cyanat, Isocyanat, Nitril, Thiocyanat und Nitrosyl, ist,
X ein Formiatanion, Acetatanion oder Propionatanion
L² mindestens ein mit Wasser mischbarer Ligand aus der Gruppe, bestehend aus Alkoholen, Aldehyden, Ketonen, Ethern, Polyethern, Estern, Harnstoffderivaten, Amiden, Nitrilen und Sulfiden, ist,
a, b, c, d, e, f, g, h, i ganze Zahlen sind, wobei
a, b, c und d so gewählt sind, daß die Elektroneutralitätsbedingung erfüllt ist, und
f und g so gewählt sind, daß die Elektroneutralitätsbedingung erfüllt ist,
dessen Röntgendiffraktogramm Reflexe bei mindestens den d-Werten
6,10 Å ± 0,04 Å
5,17 Å ± 0,04 Å
4,27 Å ± 0,02 Å
3,78 Å ± 0,02 Å
3,56 Å ± 0,02 Å
3,004 Å ± 0,007 Å
2,590 Å ± 0,006 Å
2,354 Å ± 0,004 Å
2,263 Å ± 0,004 Å
aufweist, wenn X ein Formiatanion ist,
dessen Röntgendiffraktogramm Reflexe bei mindestens den d-Werten
5,20 Å ± 0,02 Å
4,80 Å ± 0,02 Å
3,75 Å ± 0,02 Å
3,60 Å ± 0,02 Å
3,46 Å ± 0,01 Å
2,824 Å ± 0,008 Å
2,769 Å ± 0,008 Å
2,608 Å ± 0,007 Å
2,398 Å ± 0,006 Å
aufweist, wenn X ein Acetatanion ist,
und dessen Röntgendiffraktogramm Reflexe bei mindestens den d-Werten
5,59 Å ± 0,05 Å
5,40 Å ± 0,04 Å
4,08 Å ± 0,02 Å
3,94 Å ± 0,02 Å
3,76 Å ± 0,02 Å
3,355 Å ± 0,008 Å
3,009 Å ± 0,007 Å
2,704 Å ± 0,006 Å
2,381 Å ± 0,004 Å
aufweist, wenn X ein Propionatanion ist, herstellbar durch Umsetzung von Cyanometallat-Wasserstoffsäuren mindestens eines Elements M² aus der Gruppe, bestehend aus
Fe(II), Fe(III), Co(III), Cr(III), Mn(II), Mn(III), Ir(III), Rh(III), Ru(II), V(IV), V(V), Co(II) und Cr(II),
mit Formiaten, Acetaten oder Propionaten mindestens eines Elements M¹ aus der Gruppe, bestehend aus
Zn(II), Fe(II), Co(III), Ni(II), Mn(II), Co(II), Sn(II), Pb(II), Fe(III), Mo(IV), Mo(VI), Al(III), V(IV), V(V), Sr(II), W(IV), W(VI), Cu(II), und Cr(III),
in Gegenwart mindestens eines mit Wasser mischbaren Liganden L² aus der Gruppe, bestehend aus Alkoholen, Aldehyden, Ketonen, Ethern, Polyethern, Estern, Harnstoffderivaten, Amiden, Nitrilen und Sulfiden.

2. Kristalliner Multimetallcyanidkomplex der allgemeinen Formel (I)
M¹ ₐ[M²(CN)_{b}L¹ _{c}]_{d}*e(M¹ _{f}X_{g})*hL²'iH₂O (I)
in der
M¹ mindestens ein Element aus der Gruppe, bestehend aus Zn(II), Fe(II), Co(III), Ni(II), Mn(II), Co(II), Sn(II), Pb(II), Fe(III), Mo(IV), Mo(VI), Al(III), V(IV), V(V), Sr(II), W(IV), W(VI), Cu(II), und Cr(III) ist,
M² mindestens ein Element aus der Gruppe, bestehend aus Fe(II), Fe(III), Co(III), Cr(III), Mn(II), Mn(III), Ir(III), Rh(III), Ru(II), V(IV), V(V), Co(II) und Cr(II) ist,
L¹ mindestens ein Ligand aus der Gruppe, bestehend aus Cyanid, Carbonyl, Cyanat, Isocyanat, Nitril, Thiocyanat und Nitrosyl ist,
X ein Acetatanion ist,
L² mindestens ein mit Wasser mischbarer Ligand aus der Gruppe, bestehend aus Alkoholen, Aldehyden, Ketonen, Ethern, Polyethern, Estern, Harnstoffderivaten, Amiden, Nitrilen und Sulfiden ist,
a, b, c, d, e, f, g, h, i ganze Zahlen sind, wobei
a, b, c und d so gewählt sind, daß die Elektroneutralitätsbedingung erfüllt ist, und
f und g so gewählt sind, daß die Elektroneutralitätsbedingung erfüllt ist,
dessen Röntgendiffraktogramm Reflexe zeigt, die einer monoklinen Elementarzelle mit den Gitterparametern:
a = 12,38 Å ± 0,05 Å, b = 7,50 Å ± 0,05 Å,
c = 8,49 Å ± 0,05 Å, α = 90°, β = 94,5° ± 0,5°, γ = 90° entsprechen,
herstellbar durch Umsetzung von Cyanometallat-Wasserstoffsäuren mindestens eines Elements M² aus der Gruppe, bestehend aus
Fe(II), Fe(III), Co(III), Cr(III), Mn(II), Mn(III), Ir(III), Rh(III), Ru(II), V(IV), V(V), Co(II) und Cr(II),
mit Acetaten mindestens eines Elements M¹ aus der Gruppe, bestehend aus Zn(II), Fe(II), Co(III), Ni(II), Mn(II), Co(II), Sn(II), Pb(II), Fe(III), Mo(IV), Mo(VI), Al(III), V(IV), V(V), Sr(II), W(IV), W(VI), Cu(II), und Cr(III), in Gegenwart mindestens eines mit Wasser mischbaren Liganden L² aus der Gruppe, bestehend aus Alkoholen, Aldehyden, Ketonen, Ethern, Polyethern, Estern, Harnstoffderivaten, Amiden, Nitrilen und Sulfiden.

3. Gemisch aus Multimetallcyanidkomplexen der allgemeinen Formel (I)
M¹ ₐ[M²(CN)_{b}L¹ _{c}]_{d}*e(M¹ _{f}X_{g})*hL²'iH₂O (I)
in der M¹, M², L¹, X, L², a, b, c, d, e, f, g, h, i die in Anspruch 1 angegebene Bedeutung haben und wie in Anspruch 1 angegeben herstellbar sind,
wobei mindestens 20 Gew.-% des Gemisches aus Komplexen bestehen, die die in Anspruch 1 angegebenen Reflexe zeigen, oder, wenn X ein Acetatanion ist, die in Anspruch 1 angegebenen Reflexe oder die in Anspruch 2 angegebenen Gitterparameter zeigen.

4. Komplex nach Anspruch 1 oder 2, **dadurch gekennzeichnet, daß** die Cyanometallat-Wasserstoffsäuren aus Alkali- oder Erdalkalicyanometallaten durch Umsetzung an sauren Ionentauschern erhalten werden.

5. Komplex nach Anspruch 1 oder 2, **dadurch gekennzeichnet, daß** er eines oder mehrere der nachstehenden Merkmale aufweist:
- M¹ ist Zn(II)
- M² ist Co (III) und/oder Fe (III)
- L¹ ist CN
- L² ist tert.-Butanol.

6. Verfahren zur Herstellung von Multimetallcyanidkomplexen nach einem der Ansprüche 1, 2, 4 und 5 oder Gemischen nach Anspruch 3, **dadurch gekennzeichnet, daß** man die in Anspruch 1 und gegebenenfalls die in Anspruch 4 angegebenen Verfahrensschritte durchführt.

7. Verwendung von Komplexen nach einem der Ansprüche 1, 2, 4 und 5 oder Gemischen nach Anspruch 3 als Katalysatoren oder zur Herstellung von gegebenenfalls geträgerten Katalysatoren.

8. Katalysator, umfassend Komplexe nach einem der Ansprüche 1, 2, 4 und 5 oder Gemische nach Anspruch 3, gegebenenfalls auf einem Träger.

9. Verwendung von Katalysatoren nach Anspruch 8 zur Alkoxylierung von Verbindungen, die aktive Wasserstoffatome aufweisen, mit Alkylenoxiden.

10. Verfahren zur Herstellung von Polyetherpolyolen durch Umsetzung von Diolen oder Polyolen mit Ethylenoxid, Propylenoxid, Butylenoxid oder Gemischen davon, **dadurch gekennzeichnet, daß** die Umsetzung in Gegenwart eines Katalysators gemäß Anspruch 8 durchgeführt wird.

## Claims

1. A crystalline multimetal cyanide complex of the formula (I)
M¹ ₐ[M²(CN)_{b}L¹ _{c}]_{d}*e(M¹ _{f}X_{g})*hL²'iH₂O (I)
where
M¹ is at least one element from the group consisting of Zn(II), Fe(II), Co(III), Ni(II), Mn(II), Co(II), Sn(II), Pb(II), Fe(III), Mo(IV), Mo(VI), Al(III), V(IV), V(V), Sr(II), W(IV), W(VI), Cu(II), and Cr(III),
M² is at least one element from the group consisting of Fe(II), Fe(III), Co(III), Cr(III), Mn(II), Mn(III), Ir(III), Rh(III), Ru(II), V(IV), V(V), Co(II) and Cr(II),
L¹ is at least one ligand from the group consisting of cyanide, carbonyl, cyanate, isocyanate, nitrile, thiocyanate and nitrosyl,
X is a formate anion, acetate anion or propionate anion,
L² is at least one water-miscible ligand from the group consisting of alcohols, aldehydes, ketones, ethers, polyethers, esters, urea derivatives, amides, nitriles and sulfides,
a, b, c, d, e, f, g, h, i are integers, with c and d being chosen so that the electrical neutrality condition is satisfied, and
f and g being chosen so that the electrical neutrality condition is satisfied, and
the X-ray diffractogram thereof shows reflections at least at the d values of
6.10 Å ± 0.04 Å
5.17 Å ± 0.04 Å
4.27 Å ± 0.02 Å
3.78 Å ± 0.02 Å
3.56 Å ± 0.02 Å
3.004 Å ± 0.007 Å
2.590 Å ± 0.006 Å
2.354 Å ± 0.004 Å
2.263 Å ± 0.004 Å
when X is a formate anion,
the X-ray diffractogram thereof shows reflections at least at the d values of
5.20 Å ± 0.02 Å
4.80 Å ± 0.02 Å
3.75 Å ± 0.02 Å
3.60 Å ± 0.02 Å
3.46 Å ± 0.01 Å
2.824 Å ± 0.008 Å
2.769 Å ± 0.008 Å
2.608 Å ± 0.007 Å
2.398 Å ± 0.006 Å
when X is an acetate anion,
and the X-ray diffractogram thereof shows reflections at least at the d values of
5.59 Å ± 0.05 Å
5.40 Å ± 0.04 Å
4.08 Å ± 0.02 Å
4.08 Å ± 0.02 Å
3.94 Å ± 0.02 Å
3.76 Å ± 0.02 Å
3.355 Å ± 0.008 Å
3.009 Å ± 0.007 Å
2.704 Å ± 0.006 Å
2.381 Å ± 0.004 Å
when X is a propionate anion, which can be prepared by reacting cyanometalic acids of at least one element M² from the group consisting of
Fe(II), Fe(III), Co(III), Cr(III), Mn(II), Mn(III), Ir(III), Rh(III), Ru(II), V(IV), V(V), Co(II) and Cr(II),
with formates, acetates or propionates of at least one element M¹ from the group consisting of
Zn(II), Fe(II), Co(III), Ni(II), Mn(II), Co(II), Sn(II), Pb(II), Fe(III), Mo(IV), Mo(VI), Al(III), V(IV), V(V), Sr(II), W(IV), W(VI), Cu(II) and Cr(III)
in the presence of at least one water-miscible ligand L² from the group consisting of alcohols, aldehydes, ketones, ethers, polyethers, esters, urea derivatives, amides, nitriles and sulfides.

2. A crystalline multimetal cyanide complex of the formula (I)
M¹ ₐ[M²(CN) _{b}L¹ _{c}] _{d}*e (M¹ _{f}X_{g}) *hL²'iH₂O (I)
where
M¹ is at least one element from the group consisting of Zn(II), Fe(II), Co(III), Ni(II), Mn(II), Co(II), Sn(II), Pb(II), Fe(III), Mo(IV), Mo(VI), Al(III), V(IV), V(V), Sr(II), W(IV), W(VI), Cu(II), and Cr(III),
M² is at least one element from the group consisting of Fe(II), Fe(III), Co(III), Cr(III), Mn(II), Mn(III), Ir(III), Rh(III), Ru(II), V(IV), V(V), Co(II) and Cr(II),
L¹ is at least one ligand from the group consisting of cyanide, carbonyl, cyanate, isocyanate, nitrile, thiocyanate and nitrosyl,
X is an acetate anion,
L² is at least one water-miscible ligand from the group consisting of alcohols, aldehydes, ketones, ethers, polyethers, esters, urea derivatives, amides, nitriles and sulfides,
a, b, c, d, e, f, g, h, i are integers, with c and d being chosen so that the electrical neutrality condition is satisfied, and
f and g being chosen so that the electrical neutrality condition is satisfied,
the X-ray diffractogram of which shows reflections which correspond to a monoclinic unit cell with the lattice parameters:
a = 12.38 Å ± 0.05 Å, b = 7.50 Å ± 0.05 Å,
c = 8.49 Å ± 0.05 Å, α = 90°, β = 94.5° ± 0.5°,
γ = 90° which can be prepared by reacting cyanometalic acids of at least one element M² from the group consisting of
Fe(II), Fe(III), Co(III), Cr(III), Mn(II), Mn(III), Ir(III), Rh(III), Ru(II), V(IV), V(V), Co(II) and Cr(II),
with acetates of at least one element M¹ from the group consisting of
Zn(II), Fe(II), Co(III), Ni(II), Mn(II), Co (II), Sn(II), Pb(II), Fe(III), Mo(IV), Mo(VI), Al(III), V(IV), V(V), Sr(II), W(IV), W(VI), Cu(II), and Cr(III)
in the presence of at least one water-miscible ligand L² from the group consisting of alcohols, aldehydes, ketones, ethers, polyethers, esters, urea derivatives, amides, nitriles and sulfides.

3. A mixture of multimetal cyanide complexes of the formula (I)
M¹ ₐ[M²(CN)_{b}L¹ _{c}]_{d}*e(M¹ _{f}X_{g})*hL²≤iH₂O (I)
where M¹, M², L¹, X, L², a, b, c, d, e, f, g, h, i have the meanings stated in claim 1 and can be prepared as stated in claim 1,
where at least 20% by weight of the mixture consist of complexes which show the reflections stated in claim 1 or, if X is an acetate anion, show the reflections stated in claim 1 or the lattice parameters stated in claim 2.

4. A complex as claimed in claim 1 or 2, wherein the cyanometalic acids are obtained from alkali metal or alkaline earth metal cyanometalates by reaction of acidic ion exchangers.

5. A complex as claimed in claim 1 or 2, which has one or more of the following features:
- M¹ is Zn(II)
- M² is Co (III) and/or Fe (III)
- L¹ is CN
- L² is tert-butanol.

6. A process for preparing multimetal cyanide complexes as claimed in any of claims 1, 2, 4 or 5 or mixtures as claimed in claim 3, wherein the steps stated in claim 1 and, where appropriate, those stated in claim 4 are carried out.

7. The use of complexes as claimed in any of claims 1, 2, 4 and 5 or mixtures as claimed in claim 3 as catalysts or for preparing unsupported or supported catalysts.

8. A catalyst comprising complexes as claimed in any of claims 1, 2, 4 and 5 or mixtures as claimed in claim 3, with or without a carrier.

9. The use of catalysts as claimed in claim 8 for the alkoxylation of compounds which have active hydrogen atoms using alkylene oxides.

10. A process for preparing polyetherpolyols by reacting diols or polyols with ethylene oxide, propylene oxide, butylene oxide or mixtures thereof, wherein the reaction is carried out in the presence of a catalyst as claimed in claim 8.

## Revendications

1. Complexe cyanuré cristallin à métaux multiples de formule générale (I)
M¹ ₐ[M²(CN)_{b}L¹ _{c}]_{d}*e(M¹ _{f}X_{g})*hL²'iH₂O
dans laquelle
M¹ représente au moins un élément du groupe formé par Zn(II), Fe(II), Co(III), Ni(II), Mn(II), Co(II), Sn(II), Pb(II), Fe(III), Mo(IV), Mo(VI), Al(III), V(IV), V(V), Sr(II), W(IV), W(VI), Cu(II) et Cr(III),
M² représente au moins un élément du groupe formé par Fe(II), Fe(III), Co(III), Cr(III). Mn(II), Mn(III), Ir(III), Rh(III), Ru(II), V(IV), V(V), Co(II) et Cr(II),
L¹ représente au moins un ligand du groupe formé par un ligand cyanure, carbonyle, cyanate, isocyanate, nitrile, thiocyanate et nitrosyle,
X représente un anion formiate, un anion acétate ou un anion propionate
L² représente au moins un ligand miscible à l'eau, du groupe formé par les alcools, les aldéhydes, les cétones, les éthers, les polyéthers, les esters, les dérivés de l'urée, les amides, les nitriles et les sulfures,
a, b, c, d, e, f, g, h, i sont des nombres entiers, dans lesquels
a, b, c et d sont choisis de telle sorte à satisfaire à la condition de neutralité électrique et
f et g sont choisis de sorte à satisfaire la condition de neutralité électrique,
dont le diagramme de diffraction aux rayons X présente des réflexions pour au moins les valeurs d
6,10 Å ± 0,04 Å
5,17 Å ± 0,04 Å
4,27 Å ± 0,02 Å
3,78 Å ± 0,02 Å
3,56 Å ± 0,02 Å
3,004 Å ± 0,007 Å
2,590 Å ± 0,006 Å
2,354 Å ± 0,004 Å
2,263 Å ± 0,004 Å
lorsque X est un anion formiate,
dont le diagramme de diffraction aux rayons X présente des réflexions pour au moins les valeurs d
5,20 Å ± 0,02 Å
4,80 Å ± 0,02 Å
3,75 Å ± 0,02 Å
3,60 Å ± 0,02 Å
3,46 Å ± 0,01 Å
2,824 Å ± 0,008 Å
2,769 Å ± 0,008 Å
2,608 Å ± 0,007 Å
2,398 Å ± 0,006 Å
lorsque X est un anion acétate,
et dont le diagramme de diffraction aux rayons X présente des réflexions pour au moins les valeurs d
5,59 Å ± 0,05 Å
5,40 Å ± 0,04 Å
4,08 Å ± 0,02 Å
3,94 Å ± 0,02 Å
3,76 Å ± 0,02 Å
3,355 Å ± 0,008 Å
3,009 Å ± 0,007 Å
2,704 Å ± 0,006 Å
2,381 Å ± 0,004 Å
lorsque X est un anion propionate, que l'on peut préparer par réaction d'acides hydriques à cyanométallate d'au moins un élément M² du groupe formé par Fe(II), Fe(III), Co(III), Cr(III), Mn(II), Mn(III), Ir(III), Rh(III), Ru(II), V(IV), V(V), Co(II) et Cr(II), avec des formiates, acétates ou propionates d'au moins un élément M¹ du groupe formé par
Zn(II), Fe(II), Co(III), Ni(II), Mn(II), Co(II), Sn(II), Pb(II), Fe(III), Mo(IV), Mo(VI), Al(III), V(IV), V(V), Sr(II), W(IV), W(VI), Cu(II), et Cr(III),
en présence d'au moins un ligand L² miscible à l'eau du groupe formé par les alcools, les aldéhydes, les cétones, les éthers, les polyéthers, les esters, les dérivés de l'urée, les amides, les nitriles et les sulfures.

2. Complexe cyanuré cristallin à métaux multiples de formule générale (I)
M¹ ₐ[M²(CN)_{b}L¹ _{c}]_{d}*e(M¹ _{f}X_{g})*hL²'iH₂O
dans laquelle
M¹ représente au moins un élément du groupe formé par Zn(II), Fe(II), Co(III), Ni(II), Mn(II), Co(II), Sn(II), Pb(II), Fe(III), Mo(IV), Mo(VI), Al(III), V(IV), V(V), Sr(II), W(IV), W(VI), Cu(II), et Cr(III),
M² représente au moins un élément du groupe formé par Fe(II), Fe(III), Co(III), Cr(III), Mn(II), Mn(III), Ir(III), Rh(III), Ru(II). V(IV), V(V), Co(II) et Cr(II),
L¹ représente au moins un ligand du groupe formé par un ligand cyanure, carbonyle, cyanate, isocyanate, nitrile, thiocyanate et nitrosyle,
X est un anion acétate,
L² représente au moins un ligand miscible à l'eau du groupe formé par les alcools, les aldéhydes, les cétones, les éthers, les polyéthers, les esters, les dérivés de l'urée, les amides, les nitriles et les sulfures,
a, b, c, d, e, f, g, h, i sont des nombres entiers, dans lesquels
a, b, c et d sont choisis de telle sorte à satisfaire à la condition de neutralité électrique et
f et g sont choisis de sorte à satisfaire la condition de neutralité électrique,
dont le diagramme de diffraction aux rayons X présente des réflexions qui correspondent à une cellule élémentaire monoclinique ayant les paramètres de réseau
a = 12,38 Å ± 0,05 Å, b = 7,50 Å ± 0,05 Å,
c = 8,49 Å ± 0,05 Å, α = 90°, β = 94,5° ± 0,5°, y = 90°,
que l'on peut préparer par réaction d'acides hydriques à cyanométallate d'au moins un élément M² du groupe formé par
Fe(II), Fe(lll), Co(III), Cr(III), Mn(II), Mn(III), Ir(III), Rh(III), Ru(II), V(IV), V(V), Co(II) et Cr(II),
avec des acétates d'au moins un élément M¹ du groupe formé par
Zn(II), Fe(II), Co(III), Ni(II), Mn(II), Co(II), Sn(II), Pb(II), Fe(III), Mo(IV), Mo(VI), Al(III), V(IV), V(V), Sr(II), W(IV), W(VI), Cu(II), et Cr(III),
en présence d'au moins un ligand L² miscible à l'eau du groupe formé par les alcools, les aldéhydes, les cétones, les éthers, les polyéthers, les esters, les dérivés de l'urée, les amides, les nitriles et les sulfures.

3. Mélange de complexes cyanurés à métaux multiples de formule générale (I)
M¹ ₐ[M²(CN)_{b}L¹ _{c}]_{d}*e(M¹ _{f}X_{g})*hL²'iH₂O
dans laquelle M¹, M², L¹, X, L², a, b, c, d, e, f, g, h, i prennent la signification indiquée dans la revendication 1, et que l'on peut préparer tel qu'indiqué dans la revendication 1,
dans lequel au moins 20% en poids du mélange sont constitués de complexes, qui présentent les réflexions indiquées dans la revendication 1, ou, lorsque X est un anion acétate, présentent les réflexions indiquées dans la revendication 1 ou les paramètres de réseau indiqués dans la revendication 2.

4. Complexe selon la revendication 1 ou 2, **caractérisé en ce que** les acides hydriques à cyanométallate sont obtenus à partir de cyanométallate de métal alcalin ou alcalino-terreux par réaction sur des échangeurs d'ions acides.

5. Complexe selon la revendication 1 ou 2, **caractérisé en ce qu'**il présente une ou plusieurs des caractéristiques suivantes :
- M¹ représente Zn (II)
- M² représente Co(III) et/ou Fe(III)
- L¹ représente CN
- L² représente le tert-butanol.

6. Procédé de préparation de complexes cyanurés à métaux multiples selon l'une quelconque des revendications 1, 2, 4 et 5 ou de mélanges selon la revendication 3, **caractérisé en ce que** l'on réalise les étapes de procédé indiquées dans la revendication 1 et éventuellement celles indiquées dans la revendication 4.

7. Utilisation de complexes selon l'une quelconque des revendications 1, 2, 4 et 5 ou de mélanges selon la revendication 3, en tant que catalyseurs ou pour la préparation de catalyseurs éventuellement supportés.

8. Catalyseur, comprenant des complexes selon l'une quelconque des revendications 1, 2, 4 et 5 ou des mélanges selon la revendication 3, éventuellement sur un support.

9. Utilisation de catalyseurs selon la revendication 8, pour l'alcoxylation de composés qui présentent des atomes d'hydrogène actifs, avec les oxydes d'alkylène.

10. Procédé de préparation de polyétherpolyols par réaction de diols ou de polyols avec l'oxyde d'éthylène, l'oxyde de propylène, l'oxyde de butylène ou des mélanges de ceux-ci, **caractérisé en ce que** la réaction est réalisée en présence d'un catalyseur selon la revendication 8.
